(19) Europäisches Patentamt
European Patent Office
Office européen des brevets

(11) **EP 4 563 835 A1**

(12) **EUROPEAN PATENT APPLICATION**
published in accordance with Art. 153(4) EPC

(43) Date of publication:
04.06.2025 Bulletin 2025/23

(21) Application number: 23846376.4

(22) Date of filing: 20.07.2023

(51) International Patent Classification (IPC):
*F16C 19/18* (2006.01)   *B60B 35/02* (2006.01)
*B60B 35/14* (2006.01)   *F16C 33/58* (2006.01)
*F16C 33/78* (2006.01)   *F16J 15/3204* (2016.01)

(52) Cooperative Patent Classification (CPC):
B60B 35/02; B60B 35/14; F16C 19/18; F16C 33/58;
F16C 33/78; F16J 15/3204

(86) International application number:
PCT/JP2023/026683

(87) International publication number:
WO 2024/024645 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.07.2022 JP 2022119822

(71) Applicant: NTN Corporation
Osaka-shi, Osaka 530-0005 (JP)

(72) Inventors:
• KOMORI, Kazuo
Iwata-shi, Shizuoka 438-8510 (JP)
• BABA, Tomoko
Iwata-shi, Shizuoka 438-8510 (JP)

(74) Representative: Grünecker Patent- und
Rechtsanwälte
PartG mbB
Leopoldstraße 4
80802 München (DE)

(54) **WHEEL BEARING DEVICE**

(57)    Provided is a wheel bearing device that can further reduce weight while increasing rigidity. A wheel bearing device 1 comprises: an outer ring 2 having a double row of outer raceway surfaces 23, 24; an inner member (hub ring 3 and inner ring 4) having a double row of inner raceway surfaces 33, 41 opposing the double row of outer raceway surfaces 23, 24; and double ball rows 5, 6 accommodated between both raceway surfaces of the inner member and the outer ring 2 in a manner allowing rolling. The pitch diameter b of balls 7 in the ball rows 5, 6, and the pitch a between an outer side ball 7 and an inner side ball 7 in the ball rows 5, 6 satisfy the relationship

$$b/a \geq 2.0.$$

FIG.1

**Description**

TECHNICAL FIELD

The present invention relates to a bearing device for a vehicle wheel.

BACKGROUND ART

In related art, a bearing device for a vehicle wheel that rotatably supports a vehicle wheel in a suspension device of a vehicle such as an automobile is known.

In a vehicle in which a bearing device for a vehicle wheel is used, although electric vehicles are expected to become more popular, since the electric vehicle is equipped with a battery, a weight of the vehicle tends to increase, and a bearing device for a vehicle wheel used in the electric vehicle also needs to be increased in size and rigidity. However, there is a problem that the weight of the bearing device for a vehicle wheel is increased by merely increasing a size of the bearing device for a vehicle wheel.

Accordingly, as disclosed in Patent Literature 1, in a bearing device for a vehicle wheel including double-row rolling element groups interposed between an outer ring raceway surface of an outer ring member and an inner ring raceway surface of an inner ring member, a pitch circle diameter of the rolling element group on an outer side is set to be larger than a pitch circle diameter of the rolling element group on an inner side, and an increase in size is achieved while an increase in weight is suppressed.

CITATIONS LIST

PATENT LITERATURE

Patent Literature 1: JP-B 4206716

SUMMARY OF INVENTION

TECHNICAL PROBLEMS

On the other hand, in the bearing device for a vehicle wheel, it is possible to reduce the weight while enhancing the rigidity by setting a size in a radial direction to be large and setting a size in an axial direction to be small.

However, in the bearing device for a vehicle wheel described in Patent Literature 1, consideration is not made from a viewpoint of optimizing the size in the radial direction and the size in the axial direction, and there is a limit to weight reduction of the bearing device for a vehicle wheel.

The present invention has been made in view of the above circumstances, and it is an object of the present invention to provide a bearing device for a vehicle wheel capable of further reducing a weight while enhancing rigidity.

SOLUTIONS TO PROBLEMS

That is, a bearing device for a vehicle wheel is a bearing device for a vehicle wheel that includes an outer member having double-row outer raceway surfaces on an inner periphery, an inner member having double-row inner raceway surfaces facing the double-row outer raceway surfaces, and double-row rolling elements rollably accommodated between both the raceway surfaces of the outer member and the inner member. A pitch circle diameter b of the double-row rolling elements and an inter-rolling element pitch a between the rolling element on one side in an axial direction and the rolling element on the other side in the axial direction, among the double-row rolling elements, satisfy the following relationship:

$$b/a \geq 2.0.$$

ADVANTAGEOUS EFFECTS OF INVENTION

According to the present invention, it is possible to reduce the weight of the bearing device for a vehicle wheel while increasing the rigidity of the bearing device for a vehicle wheel.

BRIEF DESCRIPTION OF DRAWINGS

FIG. 1 is a side sectional view illustrating a bearing device for a vehicle wheel.
FIG. 2 is a side sectional view illustrating an outer-side seal member.
FIG. 3 is a side sectional view illustrating a bearing device for a vehicle wheel according to a second embodiment.
FIG. 4 is a side sectional view illustrating an outer-side seal member of the bearing device for a vehicle wheel according to the second embodiment.
FIG. 5 is a side sectional view illustrating a bearing device for a vehicle wheel according to a third embodiment.
FIG. 6 is a side sectional view illustrating a thickness of a portion where a recess of a hub ring is formed in the bearing device for a vehicle wheel according to the third embodiment.

DESCRIPTION OF EMBODIMENTS

Hereinafter, modes for carrying out the present invention will be described with reference to the accompanying drawings.

[Bearing device for vehicle wheel]

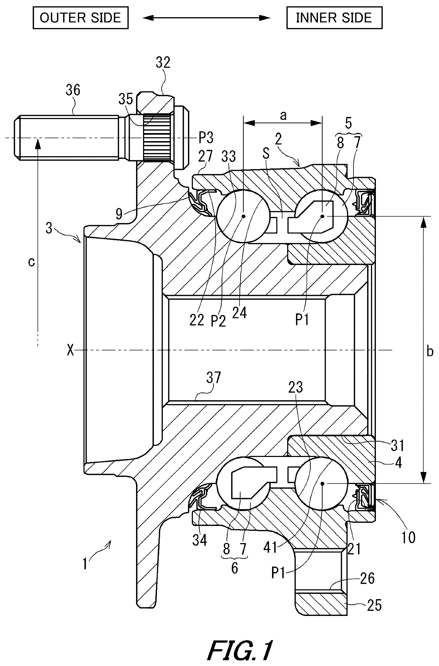

A bearing device for a vehicle wheel 1 illustrated in FIG. 1 is an embodiment of a bearing device for a vehicle wheel according to the present invention, and rotatably supports a vehicle wheel in a suspension device of a vehicle such as an automobile. The bearing device for a vehicle wheel 1 is a bearing device for a vehicle wheel for a drive wheel.

In the following description, an axial direction represents a direction along a rotation axis X of the bearing device for a vehicle wheel 1. In addition, an outer side represents one side in the axial direction and a wheel side of the bearing device for a vehicle wheel 1 when the bearing device for a vehicle wheel is attached to a vehicle body, and an inner side represents the other side in the axial direction and a vehicle body side of the bearing device for a vehicle wheel 1 when the bearing device for a vehicle wheel is attached to the vehicle body.

The bearing device for a vehicle wheel 1 has a configuration called a third generation, and includes an outer ring 2 that is an outer member, a hub ring 3 and an inner ring 4 that are inner members, two rows of inner-side ball rows 5 and outer-side ball rows 6 that are rolling rows, an outer-side seal member 9, and an inner-side seal member 10.

An inner-side opening portion 21 into which the inner-side seal member 10 can be fitted is formed at an inner-side end portion of the outer ring 2. An outer-side opening portion 22 into which the outer-side seal member 9 can be fitted is formed at an outer-side end portion of the outer ring 2.

The inner-side seal member 10 is fitted into the inner-side opening portion 21, and thus, an inner-side opening end of an annular space S formed by the outer ring 2 that is the outer member, and the hub ring 3 and the inner ring 4 that are the inner members is closed. The outer-side seal member 9 is fitted into the outer-side opening portion 22, and thus, an outer-side opening end of the annular space S is closed.

The inner-side seal member 10 and the outer-side seal member 9 are sealing devices that close the opening ends of the annular space S. As described above, the inner-side and outer-side opening ends of the annular space S are closed by the inner-side seal member 10 and the outer-side seal member 9, and thus, foreign matter such as muddy water is prevented from entering the bearing device for a vehicle wheel 1.

An inner-side outer raceway surface 23 and an outer-side outer raceway surface 24 are formed on an inner peripheral surface of the outer ring 2. A vehicle body attachment flange 25 for attaching the outer ring 2 to a vehicle body side member is integrally formed on an outer peripheral surface of the outer ring 2. A bolt hole 26 into which a fastening member (here, a bolt) for fastening the vehicle body side member and the outer ring 2 is inserted is provided in the vehicle body attachment flange 25.

A small diameter stepped portion 31 having a diameter smaller than the outer-side end portion is formed at an inner-side end portion of an outer peripheral surface of the hub ring 3. A vehicle wheel attachment flange 32 for attaching a vehicle wheel is integrally formed at an outer-side end portion of the hub ring 3.

The vehicle wheel attachment flange 32 is an example of a flange extending outward in a radial direction from one end portion of the inner member in the axial direction. A plurality of bolt holes 35 are formed in the vehicle wheel attachment flange 32. A hub bolt 36 for fastening the hub ring 3 and the vehicle wheel or a brake component can be press-fitted into the bolt hole 35.

In the hub ring 3, a sliding contact surface 34 with which the outer-side seal member 9 is in sliding contact is formed on a base portion side of the vehicle wheel attachment flange 32. An outer-side inner raceway surface 33 is provided on the outer peripheral surface of the hub ring 3 so as to face the outer-side outer raceway surface 24 of the outer ring 2. That is, the inner raceway surface 33 is formed on an outer side of the inner member by the hub ring 3.

A shaft hole 37 formed along the axial direction is formed in an inner diameter portion of the hub ring 3. The shaft hole 37 penetrates the hub ring 3 along the axial direction, and a shaft portion of a constant velocity universal joint can be coupled to the shaft hole 37.

The inner ring 4 is provided on the small diameter stepped portion 31 of the hub ring 3. The inner ring 4 is fixed to the small diameter stepped portion 31 of the hub ring 3 by press fitting. An inner-side inner raceway surface 41 is provided on an outer peripheral surface of the inner ring 4 so as to face the inner-side outer raceway surface 23 of the outer ring 2. That is, the inner raceway surface 41 is formed on the inner side of the inner member by the inner ring 4.

The inner-side ball row 5 and the outer-side ball row 6 that are rolling rows are configured by holding the plurality of balls 7 that are rolling elements by retainers 8. The inner-side ball row 5 is rollably sandwiched between the inner raceway surface 41 of the inner ring 4 and the inner-side outer raceway surface 23 of the outer ring 2. The outer-side ball row 6 is rollably sandwiched between the inner raceway surface 33 of the hub ring 3 and the outer-side outer raceway surface 24 of the outer ring 2. That is, the inner-side ball row 5 and the outer-side ball row 6 are rollably accommodated between both the raceway surfaces of the outer member and the inner member.

In the bearing device for a vehicle wheel 1, the outer ring 2, the hub ring 3 and the inner ring 4, the inner-side ball row 5, and the outer-side ball row 6 constitute a double-row angular ball bearing. The bearing device for a vehicle wheel 1 may constitute a double-row tapered roller bearing instead of the double-row angular ball bearing.

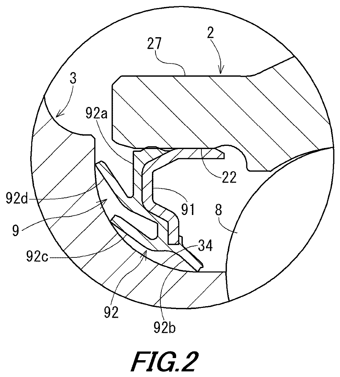

As illustrated in FIG. 2, the outer-side seal member 9 includes a core metal 91 and an elastic member 92. The core metal 91 is formed in a cylindrical shape by, for example, a steel sheet, and is fitted into the outer-side opening portion 22 of the outer ring 2 with an inner diameter.

The elastic member 92 is made of, for example, synthetic rubber, and is fixed to the core metal 91 by cure adhesion. The elastic member 92 includes a base portion 92a that cure-adheres to the core metal 91, and a grease lip 92b, a first side lip 92c, and a second side lip 92d that extend from the base portion 92a and are formed in an annular shape. The grease lip 92b, the first side lip 92c, and the second side lip 92d are in sliding contact with the sliding contact surface 34 of the hub ring 3.

The outer-side seal member 9 is positioned on an inner diameter side with respect to the outer-side opening portion 22, and does not protrude toward an outer diameter side with respect to an outer peripheral surface 27 on one end side in the axial direction of the outer ring 2.

[Relationship between pitch circle diameter of ball and pitch between balls in bearing device for a vehicle wheel 1]

The ball 7 constituting the inner-side ball row 5 and the ball 7 constituting the outer-side ball row 6 are disposed such that an inter-ball pitch is a in the axial direction. The inter-ball pitch a is a distance in the axial direction between a center P1 of the ball 7 in the inner-side ball row 5 and a center P2 of the ball 7 in the outer-side ball row 6. The inter-ball pitch a is an example of an inter-rolling element pitch a.

A pitch circle diameter of the ball 7 constituting the inner-side ball row 5 and a pitch circle diameter of the ball 7 constituting the outer-side ball row 6 are formed in the same size, and the pitch circle diameters of the ball 7 constituting the inner-side ball row 5 and the outer-side ball row 6 are b.

The pitch circle diameter b is a diameter of a circle with the rotation axis X as a center and passing through the center P1 of the ball 7 in the inner-side ball row 5. In addition, the pitch circle diameter b is a diameter of a circle with the rotation axis X as a center and passing through the center P2 of the ball 7 in the outer-side ball row 6. The pitch circle diameter b of the ball 7 is an example of the pitch circle diameter b of the rolling element.

Further, the pitch circle diameter of the hub bolt 36 press-fitted into the bolt hole 35 of the vehicle wheel attachment flange 32 is c. The pitch circle diameter c is a diameter of a circle with the rotation axis X as a center and passing through a center P3 of the hub bolt 36.

In the bearing device for a vehicle wheel 1, a ratio (b/a) of the pitch circle diameter b to the inter-ball pitch a is set to be 2.0 or more. That is, the pitch circle diameter b and the inter-ball pitch a are set to satisfy a relationship of $b/a \geq 2.0$.

The pitch circle diameter b and the inter-ball pitch a are set so as to satisfy the relationship of $b/a \geq 2.0$, and thus, a size of the bearing device for a vehicle wheel 1 in the radial direction can be set to be large, and a size of the bearing device for a vehicle wheel 1 in the axial direction can be set to be small while preventing the retainer 8 of the inner-side ball row 5 and the retainer 8 of the outer-side ball row 6 from interfering with each other. As a result, it is possible to reduce a weight of the bearing device for a vehicle wheel 1 while improving the rigidity and lifespan of the bearing device for a vehicle wheel 1 by optimizing the size of the bearing device for a vehicle wheel 1 in the radial direction and the size of the bearing device for a vehicle wheel 1 in the axial direction.

In addition, in the bearing device for a vehicle wheel 1, the ratio (b/a) of the pitch circle diameter b to the inter-ball pitch a is preferably set to be 3.6 or less when the pitch circle diameter c of the hub bolt 36 is 100. That is, the pitch circle diameter b and the inter-ball pitch a when the pitch circle diameter c is 100 are preferably set so as to satisfy a relationship of $b/a \leq 3.6$.

In a case where such a setting is performed, as represented in Table 1, for example, when the pitch circle diameter c of the hub bolt 36 is 100 mm, the pitch circle diameter b and the inter-ball pitch a can be set to satisfy the relationship of b/a $\leq$ 3.6. In this case, "b/a" when the pitch circle diameter c is 100 is "$\leq$ 3.6", and the pitch circle diameter b and the inter-ball pitch a satisfy the relationship of b/a $\leq$ 3.6.

In addition, when the pitch circle diameter c of the hub bolt 36 is 114.3 mm, the pitch circle diameter b and the inter-ball pitch a can be set to satisfy a relationship of b/a $\leq$ 4.1. In this case, 114.3 mm of the pitch circle diameter c is converted into 100 mm, "b/a" when the pitch circle diameter c is 100 is "$\leq$ 3.59", and the pitch circle diameter b and the inter-ball pitch a satisfy the relationship of b/a $\leq$ 3.6.

Further, when the pitch circle diameter c of the hub bolt 36 is 120 mm, the pitch circle diameter b and the inter-ball pitch a can be set to satisfy a relationship of b/a $\leq$ 4.3. In this case, 120 mm of the pitch circle diameter c is converted into 100 mm, "b/a" when the pitch circle diameter c is 100 is "$\leq$ 3.58", and the pitch circle diameter b and the inter-ball pitch a satisfy the relationship of b/a $\leq$ 3.6.

[Table 1]

| c (c: pitch circle diameter of hub bolt) | b/a (a: inter-ball pitch) (b: pitch circle diameter of ball) |
|---|---|
| 100 mm | 3.6 $\geq$ |
| 114.3 mm | 4.1 $\geq$ |
| 120 mm | 4.3 $\geq$ |

As described above, the pitch circle diameter b and the inter-ball pitch a when the pitch circle diameter c is 100 are set so as to satisfy the relationship of b/a $\leq$ 3.6, and thus, it is possible to prevent the hub bolt 36 and the outer ring 2 from interfering with each other and hindering the hub bolt 36 from being pulled out from the vehicle wheel attachment flange 32 when the diameter of the bearing device for a vehicle wheel 1 is increased. As a result, it is possible to further reduce the weight of the bearing device for a vehicle wheel 1 while enhancing the rigidity of the bearing device for a vehicle wheel 1 while maintaining the exchangeability of the hub bolt 36.

[Second embodiment of bearing device for vehicle wheel]

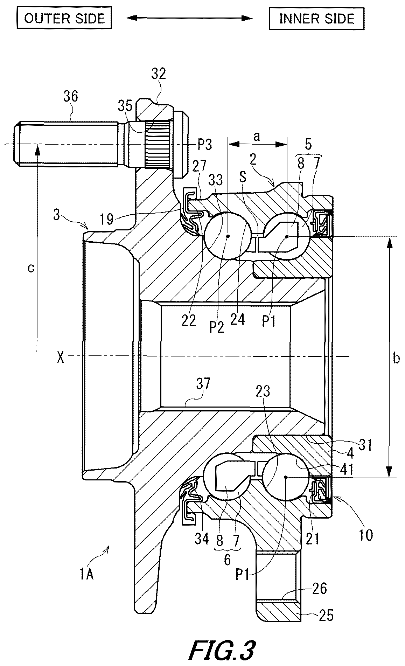

The bearing device for a vehicle wheel 1 can also be a bearing device for a vehicle wheel 1A illustrated in FIG. 3. The bearing device for a vehicle wheel 1A is different from the bearing device for a vehicle wheel 1 in that an outer-side seal member 19 is provided instead of the outer-side seal member 9. The bearing device for a vehicle wheel 1A is a bearing device for a vehicle wheel for a drive wheel.

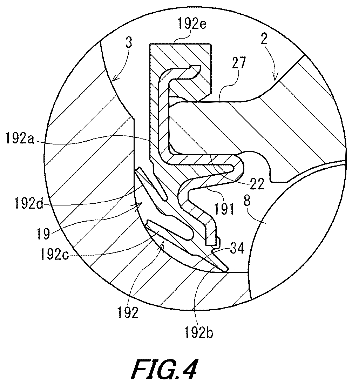

As illustrated in FIG. 4, the outer-side seal member 19 includes a core metal 191 and an elastic member 192. The core metal 191 is formed in a cylindrical shape by, for example, a steel sheet, and is fitted into the outer-side opening portion 22 of the outer ring 2 with an inner diameter.

The elastic member 192 is made of, for example, synthetic rubber, and is fixed to the core metal 191 by cure adhesion. The elastic member 192 includes a base portion 192a that cure-adheres to the core metal 191, a grease lip 192b, a first side lip 192c, and a second side lip 192d that extend from the base portion 192a and are each formed in an annular shape, and a weir portion 192e protruding toward an outer diameter side with respect to the outer peripheral surface 27 at the outer-side end portion of the outer ring 2.

The grease lip 192b, the first side lip 192c, and the second side lip 192d are in sliding contact with the sliding contact surface 34 of the hub ring 3. The weir portion 192e is fitted to the outer peripheral surface 27 of the outer ring 2 with an outer diameter.

As described above, in the outer-side seal member 19, the weir portion 192e is positioned on the outer diameter side with respect to the outer peripheral surface 27 on one end side in the axial direction of the outer ring 2, and the outer-side seal member 19 protrudes toward the outer diameter side with respect to the outer peripheral surface 27. Since the other configurations of the bearing device for a vehicle wheel 1A are similar to the configurations of the bearing device for a vehicle wheel 1, the same reference signs are given and the description thereof is omitted.

[Relationship between pitch circle diameter of ball and pitch between balls in bearing device for vehicle wheel 1A]

In the bearing device for a vehicle wheel 1A, as in the case of the bearing device for a vehicle wheel 1, the ratio (b/a) of the pitch circle diameter b to the inter-ball pitch a is set to be 2.0 or more. That is, the pitch circle diameter b and the inter-ball pitch a are set to satisfy the relationship of b/a $\geq$ 2.0.

The pitch circle diameter b and the inter-ball pitch are set a so as to satisfy the relationship of b/a ≥ 2.0, and thus, the size of the bearing device for a vehicle wheel 1A in the radial direction can be set to be large, and the size the bearing device for a vehicle wheel 1A in the axial direction can be set to be small while preventing the retainer 8 of the inner-side ball row 5 and the retainer 8 of the outer-side ball row 6 from interfering with each other. As a result, it is possible to reduce the weight of the bearing device for a vehicle wheel 1 while improving the rigidity and lifespan of the bearing device for a vehicle wheel 1A by optimizing the size of the bearing device for a vehicle wheel 1 in the radial direction and the size of the bearing device for a vehicle wheel 1A in the axial direction.

In addition, in the bearing device for a vehicle wheel 1A, the ratio (b/a) of the pitch circle diameter b to the inter-ball pitch a is preferably set to be 3.2 or less when the pitch circle diameter c of the hub bolt 36 is 100. That is, the pitch circle diameter b and the inter-ball pitch a when the pitch circle diameter c is 100 are preferably set so as to satisfy a relationship of b/a ≤ 3.2.

In a case where such a setting is performed, as represented in Table 2, for example, when the pitch circle diameter c of the hub bolt 36 is 100 mm, the pitch circle **diameter** b and the inter-ball pitch a can be set to satisfy the relationship of b/a ≤ 3.2. **In** this case, "b/a" when the pitch circle diameter c is 100 is "≤ 3.2", and the pitch circle diameter b and the inter-ball pitch a satisfy the relationship of b/a ≤ 3.2.

**In** addition, when the pitch circle diameter c of the hub bolt 36 is 114.3 mm, the pitch circle diameter b and the inter-ball pitch a can be set to satisfy a relationship of b/a ≤ 3.7. **In** this case, 114.3 mm of the pitch circle diameter c is converted into 100 mm, "b/a" when the pitch circle diameter c is 100 is "≤ 3.24", and the pitch circle diameter b and the inter-ball pitch a satisfy the relationship of b/a ≤ 3.2.

Further, when the pitch circle diameter c of the hub bolt 36 is 120 mm, the pitch circle diameter b and the inter-ball pitch a can be set to satisfy a relationship of b/a ≤ 3.9. In this case, 120 mm of the pitch circle diameter c is converted into 100 mm, "b/a" when the pitch circle diameter c is 100 is "≤ 3.25", and the pitch circle diameter b and the inter-ball pitch a satisfy the relationship of b/a ≤ 3.2.

[Table 2]

| c (c: pitch circle diameter of hub bolt) | b/a (a: inter-ball pitch) (b: pitch circle diameter of ball) |
|---|---|
| 100mm | 3.2 ≥ |
| 114.3mm | 3.7 ≥ |
| 120mm | 3.9 ≥ |

As described above, the pitch circle diameter b and the inter-ball pitch a when the pitch circle diameter c is 100 are set so as to satisfy the relationship of b/a ≤ 3.2, and thus, it is possible to prevent the hub bolt 36 and the weir portion 192e protruding toward the outer diameter side of the outer peripheral surface 27 of the outer ring 2 from interfering with each other and hindering the hub bolt 36 from being pulled out from the vehicle wheel attachment flange 32 when the diameter of the bearing device for a vehicle wheel 1 is increased. As a result, it is possible to further reduce the weight of the bearing device for a vehicle wheel 1A while enhancing the rigidity of the bearing device for a vehicle wheel 1A while maintaining the exchangeability of the hub bolt 36.

[Third embodiment of bearing device for vehicle wheel]

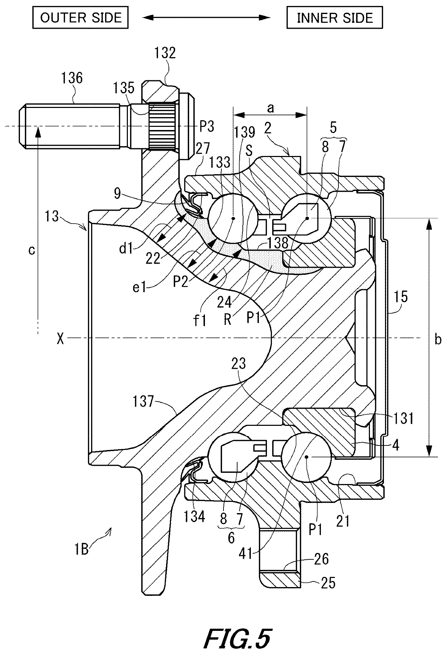

The bearing device for a vehicle wheel 1 can also be a bearing device for a vehicle wheel 1B illustrated in FIG. 5. The bearing device for a vehicle wheel 1B is a bearing device for a vehicle wheel for a driven wheel, and is different from the bearing device for a vehicle wheel 1 mainly in that a hub ring 13 is provided instead of the hub ring 3.

A small diameter stepped portion 131 having a diameter smaller than the outer-side end portion is formed at an inner-side end portion of an outer peripheral surface of the hub ring 13. A wheel attachment flange 132 for attaching a vehicle wheel is integrally formed at an outer-side end portion of the hub ring 13.

The wheel attachment flange 132 is an example of a flange extending outward in the radial direction from one end portion of the inner member in the axial direction. A plurality of bolt holes 135 are formed in the vehicle wheel attachment flange 132. A hub bolt 136 for fastening the hub ring 13 and the vehicle wheel or the brake component can be press-fitted into the bolt hole 135.

In the hub ring 13, a sliding contact surface 134 with which the outer-side seal member 9 is in sliding contact is formed on a base portion side of the vehicle wheel attachment flange 132. An outer-side inner raceway surface 133 is provided on an outer peripheral surface 138 of the hub ring 13 so as to face the outer-side outer raceway surface 24 of the outer ring 2.

A recessed portion 137 recessed from an outer-side end toward an inner end side in the axial direction is formed in an inner diameter portion of the hub ring 13. The recess 137 is formed up to a position between the inner-side ball row 5 and the outer-side ball row 6 in the axial direction. The inner ring 4 is provided on the small diameter stepped portion 131 of the hub ring 13. The inner-side end portion of the hub ring 13 is swaged to the inner-side end surface of the inner ring 4, and the inner ring 4 is fixed to the small diameter stepped portion 131 of the hub ring 13 by press-fitting and swaging.

The hub ring 13 has an inclined surface 139 between the inner raceway surface 133 and the outer peripheral surface 138 on the inner side of the inner raceway surface 133 in the axial direction. The hub ring 3 has a heat-treated hardened layer R from a portion where the sliding contact surface 134 is formed to the outer peripheral surface 138 through a portion where the inner raceway surface 133 is formed and a portion where the inclined surface 139 is formed.

In the bearing device for a vehicle wheel 1B, the inner-side seal member 10 is not fitted to the inner-side opening portion 21 of the outer ring 2, and instead, a cap 15 that closes the inner-side opening portion 21 is fitted. Since the other configurations of the bearing device for a vehicle wheel 1B are similar to the configurations of the bearing device for a vehicle wheel 1, the same reference signs are given and description thereof is omitted.

[Relationship between pitch circle diameter of ball and inter-ball pitch in bearing device for vehicle wheel 1B]

In the bearing device for a vehicle wheel 1B, as in the case of the bearing device for a vehicle wheel 1, the ratio (b/a) of the pitch circle diameter b to the inter-ball pitch a is set to be 2.0 or more. That is, the pitch circle diameter b and the inter-ball pitch a are set to satisfy the relationship of $b/a \geq 2.0$.

The pitch circle diameter b and the inter-ball pitch a are set so as to satisfy the relationship of $b/a \geq 2.0$, and thus, the size of the bearing device for a vehicle wheel 1B in the radial direction can be set to be large, and the size of the bearing device for a vehicle wheel 1B in the axial direction can be set to be small while preventing the retainer 8 of the inner-side ball row 5 and the retainer 8 of the outer-side ball row 6 from interfering with each other. As a result, it is possible to reduce the weight of the bearing device for a vehicle wheel 1B while improving the rigidity and lifespan of the bearing device for a vehicle wheel 1B by optimizing the size of the bearing device for a vehicle wheel 1B in the radial direction and the size of the bearing device for a vehicle wheel 1B in the axial direction.

[Shape of hub ring in bearing device for vehicle wheel 1B]

The recess 137 of the hub ring 13 is formed along an outer shape of the hub ring 13, a thickness between the sliding contact surface 134 of the hub ring 13 and an inner peripheral surface of the recess 137 is d1, a thickness between the inner raceway surface 133 of the hub ring 13 and the inner peripheral surface of the recess 137 is e1, and a thickness between the inclined surface 139 of the hub ring 13 and the inner peripheral surface of the recess 137 is f1.

The thickness d1 is represented by a shortest distance between the sliding contact surface 134 and the inner peripheral surface of the recess 137, the thickness e1 is represented by a shortest distance between the inner raceway surface 133 and the inner peripheral surface of the recess 137, and the thickness f1 is represented by a shortest distance between the inclined surface 139 and the inner peripheral surface of the recess 137.

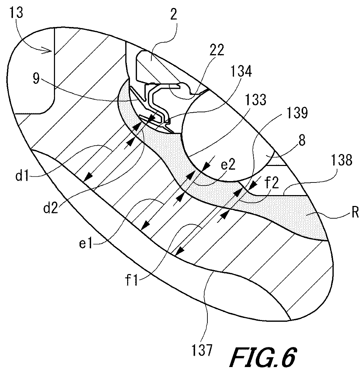

As illustrated in FIG. 6, a depth of the heat-treated hardened layer R at the portion of the hub ring 13 where the sliding contact surface 134 is formed is d2, a depth of the heat-treated hardened layer R at the portion of the hub ring 13 where the inner raceway surface 133 is formed is e2, and a depth of the heat-treated hardened layer R at the portion of the hub ring 13 where the inclined surface 139 is formed is f2.

In the bearing device for a vehicle wheel 1B, the thickness d1 between the sliding contact surface 134 and the inner peripheral surface of the recess 137 is formed to be twice or more the depth d2 of the heat-treated hardened layer R in the portion where the sliding contact surface 134 is formed, the thickness e1 between the inner raceway surface 133 and the inner peripheral surface of the recess 137 is formed to be twice or more the depth e2 of the heat-treated hardened layer R in the portion where the inner raceway surface 133 is formed, and the thickness f1 between the inclined surface 139 and the inner peripheral surface of the recess 137 is formed to be twice or more the depth f2 of the heat-treated hardened layer R in the portion where the inclined surface 139 is formed.

In addition, the thickness d1 between the sliding contact surface 134 and the inner peripheral surface of the recess 137, the thickness e1 between the inner raceway surface 133 and the inner peripheral surface of the recess 137, and the thickness f1 between the inclined surface 139 and the inner peripheral surface of the recess 137 are set such that a difference among the thickness d1, the thickness e1, and the thickness f1 is 5 mm or less. The difference among the thickness d1, the thickness e1, and the thickness f1 refers to a difference between a maximum value and a minimum value of the thickness d1, the thickness e1, and the thickness f1. That is, the thickness d1, the thickness e1, and the thickness f1 are set so as to have a difference of 5 mm or less, and have substantially uniform sizes. In addition, the thickness d1 and the thickness e1 are set to have a difference of 5 mm or less, and the thickness e1 and the thickness f1 are set to have a difference of 5 mm or less.

As described above, in the bearing device for a vehicle wheel 1B, since the recess 137 is formed in the hub ring 13, it is possible to reduce the weight of the bearing device for a vehicle wheel 1B. In this case, since the thicknesses d1, e1, and f1 of the hub ring 13 are formed to be twice or more the depth f2 of the heat-treated hardened layer R, the rigidity of the hub ring 13 can be secured. In addition, when the thickness d1, the thickness e1, and the thickness f1 of the hub ring 13 are formed in substantially uniform sizes, since a fiber flow by a forging process of the hub ring 13 is favorably formed toward the vehicle wheel attachment flange 132 along the inner raceway surface 133, the lifespan of the bearing device for a vehicle wheel 1B can be improved.

In the hub ring 13, the recess 137 may be formed only up to a portion on an outer ide of the inclined surface 139 in the axial direction. In this case, the thickness d1 between the sliding contact surface 134 and the inner peripheral surface of the recess 137 and the thickness e1 between the inner raceway surface 133 and the inner peripheral surface of the recess 137 can be set such that a difference between the thickness d1 and the thickness e1 is 5 mm or less. Also in this case, the fiber flow by the forging process of the hub ring 13 is favorably formed along the inner raceway surface 133, and the lifespan of the bearing device for a vehicle wheel 1B can be improved.

INDUSTRIAL APPLICABILITY

The present invention is applicable to a bearing device for a vehicle wheel.

REFERENCE SIGNS LIST

1, 1A, 1B bearing device for vehicle wheel
2 outer ring
3, 13 hub ring
4 inner ring
5 inner-side ball row
6 outer-side ball row
9, 19 outer-side seal member
23 (inner-side) outer raceway surface
24 (outer-side) outer raceway surface
27 outer peripheral surface
32, 132 vehicle wheel attachment flange
33, 133 (outer-side) inner raceway surface
35, 135 bolt hole
36, 136 hub bolt
41 (inner-side) inner raceway surface
134 sliding contact surface
137 recess
138 outer peripheral surface
139 inclined surface
192e weir portion
a inter-ball pitch
b pitch circle diameter (of ball)
c pitch circle diameter (of hub bolt)
d1 thickness (between sliding contact surface of hub ring and inner peripheral surface of recess)
d2 depth of heat-treated hardened layer (at portion where sliding contact surface of hub ring is formed)
e1 thickness (between inner raceway surface of hub ring and inner peripheral surface of recess)
e2 depth of heat-treated hardened layer (at portion where inner raceway surface of hub ring is formed)
f1 thickness (between inclined surface of hub ring and inner peripheral surface of recess)
f2 depth of heat-treated hardened layer (at portion where inclined surface of hub ring is formed)
R heat-treated hardened layer

**Claims**

1. A bearing device for a vehicle wheel, comprising:

an outer member having double-row outer raceway surfaces on an inner periphery;
an inner member having double-row inner raceway surfaces facing the double-row outer raceway surfaces; and
double-row rolling elements rollably accommodated between both the raceway surfaces of the outer member and the inner member,
wherein a pitch circle diameter b of the double-row rolling elements and an inter-rolling element pitch a between the rolling element on one side in an axial direction and the rolling element on an other side in the axial direction, among the double-row rolling elements, satisfy a following relationship:

$$b/a \geq 2.0.$$

2. The bearing device for a vehicle wheel according to claim 1, further comprising:

a flange extending outward in a radial direction from one end portion of the inner member in the axial direction;
a hub bolt press-fitted into a bolt hole formed in the flange; and
a sealing device configured to close an opening end on one end side of an annular space formed by the outer member and the inner member in the axial direction, the sealing device not protruding toward an outer diameter side from an outer peripheral surface on one end side of the outer member in the axial direction,
wherein the pitch circle diameter b of the double-row rolling elements and the inter-rolling element pitch a between the rolling element on one side in the axial direction and the rolling element on the other side in the axial direction, among the double-row rolling elements, when a pitch circle diameter c of the hub bolt is 100, satisfy the following relationship:

$$b/a \leq 3.6.$$

3. The bearing device for a vehicle wheel according to claim 1, further comprising:

a flange extending outward in a radial direction from one end portion of the inner member in the axial direction;
a hub bolt press-fitted into a bolt hole formed in the flange; and
a sealing device that closes an opening end on one end side of an annular space formed by the outer member and the inner member in the axial direction, the sealing device having a weir portion protruding toward an outer diameter side from an outer peripheral surface on one end side of the outer member in the axial direction,
wherein the pitch circle diameter b of the double-row rolling elements and the inter-rolling element pitch a between the rolling element on one side in the axial direction and the rolling element on the other side in the axial direction, among the double-row rolling elements, when a pitch circle diameter c of the hub bolt is 100, satisfy the following relationship:

$$b/a \leq 3.2.$$

4. The bearing device for a vehicle wheel according to claim 1, further comprising a sealing device that closes an opening end on one end side of an annular space formed by the outer member and the inner member in the axial direction,

wherein the inner member has a recess recessed from one end in the axial direction toward the other end side, and a sliding contact surface with which the sealing device is in sliding contact, and
in the inner member,

a portion where the inner raceway surface on one side in the axial direction is formed and a portion where the sliding contact surface is formed have heat-treated hardened layers,
a thickness d1 between the sliding contact surface and an inner peripheral surface of the recess is twice or more a depth d2 of the heat-treated hardened layer of the portion where the sliding contact surface is formed,
a thickness e1 between the inner raceway surface on one side in the axial direction and the inner peripheral surface of the recess is twice or more a depth e2 of the heat-treated hardened layer of the portion where the inner-side raceway surface is formed, and
a difference between the thickness d1 and the thickness e1 is 5 mm or less.

5. The bearing device for a vehicle wheel according to claim 4, wherein the inner member has an inclined surface between the inner raceway surface on one side in the axial direction and an outer peripheral surface on the other side in the axial direction with respect to the inner raceway surface on one side in the axial direction, and in the inner member,

a portion where the inclined surface is formed has the heat-treated hardened layer,
a thickness f1 between the inclined surface and the inner peripheral surface of the recess is twice or more a depth f2 of the heat-treated hardened layer of the portion where the inclined surface is formed, and
a difference between the thickness f1 and the thickness e1 is 5 mm or less.

FIG.1

*FIG.2*

OUTER SIDE ←——————→ INNER SIDE

*FIG.3*

*FIG.4*

OUTER SIDE ← → INNER SIDE

*FIG.5*

FIG.6

## INTERNATIONAL SEARCH REPORT

| | International application No. |
|---|---|
| | **PCT/JP2023/026683** |

**A. CLASSIFICATION OF SUBJECT MATTER**

*F16C 19/18*(2006.01)i; *B60B 35/02*(2006.01)i; *B60B 35/14*(2006.01)i; *F16C 33/58*(2006.01)i; *F16C 33/78*(2006.01)i; *F16J 15/3204*(2016.01)i
FI: F16C19/18; F16C33/58; F16C33/78 D; F16J15/3204 201; B60B35/02 L; B60B35/14 V

According to International Patent Classification (IPC) or to both national classification and IPC

**B. FIELDS SEARCHED**

Minimum documentation searched (classification system followed by classification symbols)
F16C19/18; F16C33/58; F16C33/78; F16J15/3204; B60B35/02; B60B35/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-34735 A (NSK LTD.) 08 March 2018 (2018-03-08) paragraphs [0019]-[0034], fig. 1 | 1-2 |
| Y | | 4-5 |
| X | JP 2019-178773 A (NTN CORP.) 17 October 2019 (2019-10-17) paragraphs [0015]-[0027], [0038]-[0043], fig. 1-2, 6 | 1, 3 |
| Y | | 4-5 |
| Y | JP 2008-55984 A (NTN CORP.) 13 March 2008 (2008-03-13) paragraphs [0018]-[0030], fig. 1-2 | 4-5 |
| A | WO 2018/092673 A1 (NTN CORP.) 24 May 2018 (2018-05-24) entire text, all drawings | 1-5 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**17**

## INTERNATIONAL SEARCH REPORT
### Information on patent family members

International application No.

**PCT/JP2023/026683**

| Patent document cited in search report | | | Publication date (day/month/year) | Patent family member(s) | | | Publication date (day/month/year) |
|---|---|---|---|---|---|---|---|
| JP | 2018-34735 | A | 08 March 2018 | CN | 207229605 | U | |
| JP | 2019-178773 | A | 17 October 2019 | (Family: none) | | | |
| JP | 2008-55984 | A | 13 March 2008 | (Family: none) | | | |
| WO | 2018/092673 | A1 | 24 May 2018 | US | 2019/0264745 | A1 | |
| | | | | entire text, all drawings | | | |
| | | | | EP | 3542920 | A1 | |
| | | | | CN | 109862974 | A | |

Form PCT/ISA/210 (patent family annex) (January 2015)

**EP 4 563 835 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4206716 B